# NOUVEAU FASCICULE DE BREVET EUROPEEN

(11) **EP 0 695 018 B2**
(45) Date de publication et mention de la décision concernant l'opposition: **22.03.2006**
(45) Mention de la délivrance du brevet: 19.11.1997
(21) Numéro de dépôt: 95401759.6
(22) Date de dépôt: 25.07.1995
(51) Int. Cl.: H02K 1/27, H02K 21/16

(54) **Moteur synchrone comportant des aimants insérés dans un rotor**
Synchronmotor mit im Rotor eingebetteten Permanentmagneten
Synchronous motor having a rotor with built-in magnets

(30) Priorité: 27.07.1994 FR 9409306
(43) Date de publication de la demande: 31.01.1996
(73) Titulaire: PARVEX, 21000 Dijon (FR)
(72) Inventeur: Cuenot, Alain, F-21000 Dijon (FR); Petitboulanger, Alain, F-21000 Dijon (FR)
(74) Mandataire: Prugneau, Philippe

(56) Documents cités:
- EP-A- 0 378 162
- EP-A- 0 538 472
- US-A- 5 097 166
- Fischer: "Elektrische Maschine"; 1992; p. 290 à 293 et p. 320 à 325
- Huette: "Die Grundlagen der Ingenieurwissenschaften"; 1989; p. G46 à G49
- Mende-Simon: "Physik Gleichungen und Tabellen"; 1974; p. 210-211
- Tagungsband 3. Kolloquium Antriebstechnik, Solothurn; 1990; p. 1 à 10
- Henneberger, Domack: "Design and control methods of permanent magnet excited selfcommutated synchronous machines"; Zuerich 1991; p. 1 à 6
- SPS/IPC/Drive; Sindelfingen; 1992; p.12 à 14

## Description

La présente invention concerne un moteur synchrone notamment adapté pour marcher à puissance constante, à vitesse élevée et susceptible de permettre un dégagement central dans l'axe rotorique important.

La marche à puissance constante d'un moteur synchrone à aimants à été évoquée dans le document PROCEEDINGS OF THE IEE, vol. 70, n°2, février 1982, NEW-YORK US, pages 116-135, de B.K. BOSE, "AD-JUSTABLE SPEED AC DRIVES A TECHNOLOGY STATUS REVIEW".

Avec un moteur synchrone, afin d'obtenir une grande plage de fonctionnement à puissance constante, il est nécessaire de recourir à une avance de phase importante.

Avec un moteur synchrone à aimants traditionnel, cette avance de phase importante (jusqu'à 90°) conduit, pour un moteur fonctionnant à vide, à un niveau de courant trop élevé, niveau pouvant dépasser la limite thermique des produits concernés et présenter le risque important de désaimantation des aimants du rotor entraînant des pertes de performance et de fiabilité des machines.

Cette solution entraîne également le choix d'un variateur électronique d'alimentation de puissance installée très importante par rapport à la puissance mécanique obtenue d'où un compromis économique défavorable.

Une construction particulière d'un moteur synchrone a été décrite dans le brevet FR-2 641 654 de la demanderesse.

Ce moteur adapté pour la marche à puissance constante ne permet pas toutefois d'atteindre des vitesses de rotation élevées (vitesse périphériques maximales de l'ordre de 300 km/h), du fait de la construction mécanique insuffisamment résistante à la centrifugation du rotor. Par ailleurs, les aimants, dont la disposition est radiale, occupent la plus grande partie du volume du rotor ce qui ne permet pas de dégager un trou central dans le rotor important pour mettre un arbre très rigide ou pour disposer des organes de commande, par exemple des organes mécaniques d'un mandrin fixé sur l'axe du rotor.

Aussi un but de la présente invention est de réaliser un moteur synchrone pouvant fonctionner à puissance constante dans une gamme de vitesse importante, par exemple, comprise entre une fois une vitesse de base N₀ donnée et 20 fois cette valeur.

Un autre but de la présente invention est un moteur synchrone permettant d'obtenir des vitesses de rotation très importantes.

A titre d'exemple, la vitesse atteinte à la périphérie du rotor est typiquement de 400 à 600 km/h. Pour cela la tenue mécanique du rotor à la centrifugation doit être très bonne et les pertes fer à la vitesse maximale doivent être réduites.

Un autre but de la présente invention est un moteur synchrone permettant d'obtenir une construction du rotor susceptible de laisser libre en son centre, un trou important destiné à recevoir un arbre très rigide.

Par exemple, le diamètre du trou intérieur à la tôle rotor peut atteindre une valeur de 130 mm pour un diamètre extérieur de la tôle stator de 240 mm.

Tous ces buts sont atteints par la présente invention qui a pour objet un moteur synchrone selon la revendication 1.

L'invention a également pour objet un moteur synchrone satisfaisant à l'une des caractéristiques suivantes:
- la réluctance, offerte à un flux créé par un courant dans ledit stator et se propageant dans le rotor par un deuxième chemin magnétique F4 ne passant pas par les aimants (3), est comprise entre 1 et 10 fois la valeur offerte à ce dit flux se propageant par un troisième chemin F5 passant par les aimants,
- le chemin magnétique F3 offert au flux desdits aimants à l'intérieur du rotor est réalisé par un matériau ferrimagnétique ou ferromagnétique qui entoure globalement lesdits aimants d'un même pôle et qui dispose entre lesdits pôles de portions de liaison L₁ étroites et saturées magnétiquement dont la largeur l₁ et la forme est définie pour ajuster la valeur de la réluctance offerte au flux des aimants dans le rotor,
- chaque pôle dispose d'au moins deux aimants par pôle, chaque aimant étant entouré par une liaison en un matériau ferrimagnétique ou ferromagnétique, la largeur l₂ de cette liaison magnétique entre les aimants d'un même pôle étant définie pour assurer la tenue mécanique à la centrifugation, et
- un évidement est disposé au centre dudit rotor dont le diamètre est compris entre 0,2 et 0,6 fois le diamètre extérieur d'une tôle stator.

Le type de structure proposé permet de concevoir un moteur disposant d'un trou, réalisé au centre du rotor dont le diamètre est compris entre 0.2 et 0.6 fois le diamètre extérieur de la tôle stator.

Un avantage du moteur synchrone selon l'invention est que sa construction permet:
- d'atteindre les caractéristiques couple, vitesse et puissance avec un courant qui reste dans les limites permises par le moteur,
- de préserver l'état de magnétisation des aimants du rotor, c'est-à-dire de préserver tout risque de démagnétisation, et
- d'optimiser le rapport entre la puissance installée du variateur électronique d'alimentation et la puissance mécanique obtenue sur l'arbre.

L'invention sera bien comprise par les explications données ci-après en regard des dessins annexés dans lesquels:
- la figure 1 est un diagramme vectoriel montrant la marche d'un moteur synchrone avec une avance de phase de 90 degrés,
- la figure 2 est une vue en coupe axiale d'un premier mode de réalisation préféré du moteur synchrone à aimants selon l'invention, et
- la figure 3 est une vue en coupe axiale d'un second mode de réalisation préféré du moteur synchrone selon l'invention.

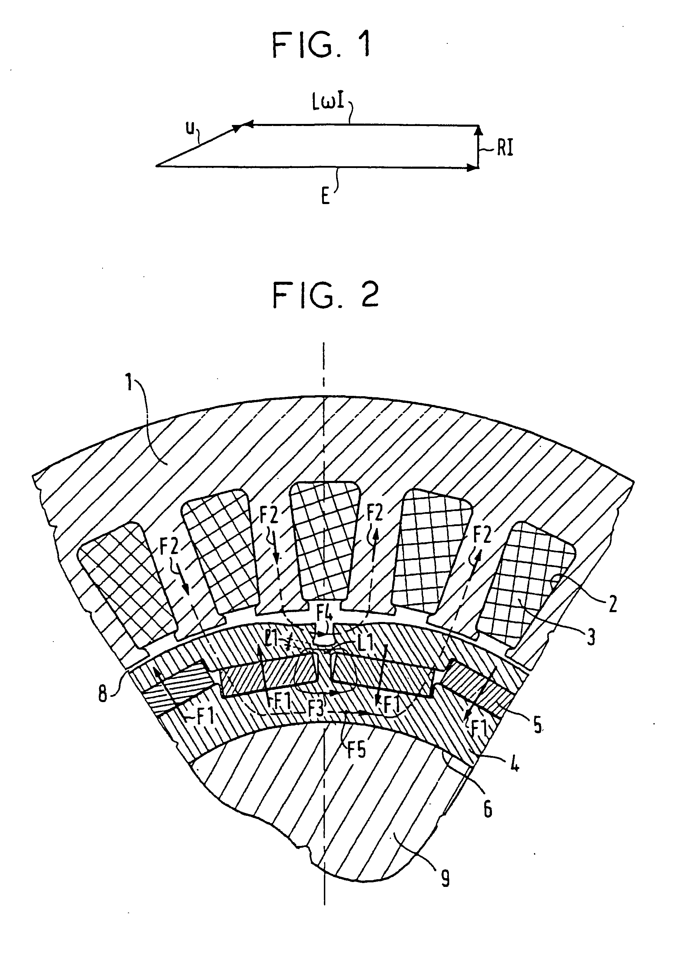

Dans un moteur synchrone à aimants, pour lequel on veut utiliser une avance de phase importante, par exemple 90°, le diagramme vectoriel, selon un point de fonctionnement quelconque, se présente comme le montre la figure 1, avec:
E = Force électromotrice du moteur,
U = Différence de potentiel aux bornes des bobinages du moteur, et
L, R = Inductance et résistance du moteur.

La force électromotrice E est une caractéristique intrinsèque du moteur.

La différence de potentiel U est imposée par le variateur. Sa valeur est susceptible d'être modifiée selon besoin.

L'inductance L est également une caractéristique intrinsèque du moteur.

Le courant I est une résultante.

Pour obtenir une plage de fonctionnement égale ou supérieure à 20 il faut que l'amplitude du vecteur U puisse atteindre une valeur 20 fois plus faible que l'amplitude du vecteur E, c'est-à-dire que l'amplitude du vecteur Lωl (en négligeant la valeur du vecteur RI qui reste faible) puisse atteindre environ les 19/20 de l'amplitude du vecteur E.

Ce qui précède signifie, qu'à une vitesse donnée, les conditions ci-dessus étant respectées, la valeur du courant 1 reste à l'intérieur des limites permises par le moteur.

Il est donc à prévoir une construction de moteur telle que la self inductance interne vérifie ces conditions sans adjonction d'une self inductance extérieure au moteur et en série avec celui-ci.

Si une valeur minimale de self inductance devait être obtenue par l'addition d'une self extérieure au moteur, on réduirait bien le courant à la valeur souhaitée mais cette solution conduirait à deux inconvénients importants:
a/ Des tensions trop élevées aux bornes des bobinages du moteur.
b/ Des pertes fer rédhibitoires au fonctionnement à vitesse élevée.

Le vecteur Lωl devant prendre des valeurs supérieures ou égales aux 19/20 du vecteur E, le vecteur U est nécessairement petit devant le vecteur E. Ce vecteur est représentatif du flux résultant des actions, dans les bobinages stator, du courant 1 et du flux des aimants et le vecteur E est représentatif du flux créé par les aimants du rotor seuls dans le stator (en absence de courant dans les bobinages stator). Cette réduction du flux magnétique créé par le stator sous l'action du courant, peut provoquer un recul des aimants du rotor et les conduire au voisinage du seuil de désaimantation.

Dans ces conditions, si un circuit magnétique de circulation du flux magnétique des aimants dans le rotor n'est pas prévu, ou si un circuit magnétique de circulation du flux, créé par les courants du stator, qui ne passe pas par les aimants, n'est pas prévu, les aimants devront travailler à la limite de désaimantation, situation précaire quant aux performances et à la fiabilité du moteur,

Le moteur synchrone à aimants proposé pour ce fonctionnement est constitué d'un stator et d'un rotor, ledit rotor étant construit de telle façon que, lorsque l'avance de phase atteint des valeurs importantes et le courant 1 des niveaux élevés, d'une part, une grande partie du flux des aimants continue à circuler par les chemins magnétiques prévus dans le rotor, d'autre part le flux créé par le courant 1 circule en partie par le chemin magnétique prévu dans le rotor et qui ne passe pas par les aimants, ce qui supprime le risque de la démagnétisation.

Un exemple de moteur synchrone selon l'invention est représenté dans la figure 2.

La référence 1 désigne une carcasse statorique munie d'encoches 2 dans lesquelles sont disposés des bobinages 3.

La référence 4 désigne les tôles du rotor, découpées et empilées pour définir des logements dans lesquels sont placés des aimants 5. La direction d'aimantation des aimants est radiale, c'est-à-dire perpendiculaire à l'axe du moteur et sensiblement perpendiculaire à un plan passant par l'aimant.

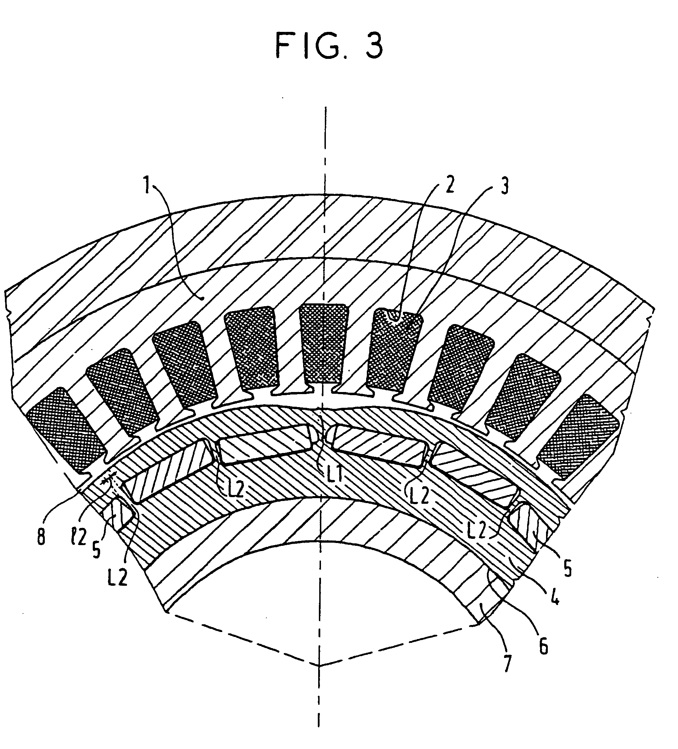

La référence 6 désigne le trou central du rotor dans lequel vient se positionner soit un arbre plein 9 (figure 2), soit un arbre creux 7 (figure 3) susceptible de recevoir une unité de commande connue (non représentée).

On désigne par 8 l'entrefer entre le rotor et le stator.

Les flèches F1 représentent le flux magnétique émis par les aimants du rotor, tandis que les flèches F2 représentent le flux magnétique créé par les bobinàges 3 du stator.

On voit que la configuration du moteur de l'invention ne risque pas de désaimanter les aimants, car, d'une part, le flux des aimants trouve à se refermer en empruntant un chemin de fermeture désigné par la flèche F3.

La Demanderesse a observé que le fonctionnement était optimal en donnant au chemin de fermeture du flux magnétique des aimants dans le rotor une réluctance R2 comprise entre 1 et 10 fois la réluctance R1 offerte au flux des aimants du côté de l'entrefer 8.

L'homme du métier saura aisément choisir la nature, la largeur I₁ et la forme de l'élément de liaison L1 permettant de réaliser les conditions ci-dessus.

D'autre part, une partie du flux créé par le bobinage du stator peut se refermer par le chemin de contournement magnétique désigné par la flèche F4. La demanderesse a observé que le fonctionnement était optimal en donnant au chemin de contournement du flux du bobinage une réluctance comprise entre 1 fois et 10 fois la valeur de la réluctance offerte par le chemin passant par les aimants désigné par la flèche F5.

Le chemin magnétique offert au flux des aimants à l'intérieur du rotor peut être réalisé avantageusement par un matériau ferrimagnétique ou ferromagnétique qui entoure globalement les aimants d'un même pôle et qui dispose de zones plus étroites saturées magnétiquement entre les pôles dont la largeur l₁ est définie pour ajuster la valeur de la réluctance offerte au flux des aimants dans le rotor.

La figure 3 représente une autre disposition du moteur synchrone suivant l'invention pour lequel une liaison supplémentaire L₂ a été créé entre les aimants. Cette liaison crée un chemin magnétique pour le flux des aimants au même titre que la liaison L₁ et renforce en plus de façon considérable la tenue du rotor à la centrifugation.

Avantageusement, chaque pôle peut disposer d'au moins deux aimants par pôle, chaque aimant étant entourés par un matériau ferrimagnétique ou ferromagnétique, la largeur l₂ de la zone magnétique entre les aimants d'un même pôle étant définie pour assurer la tenue mécanique à la centrifugation.

Les figures 2 et 3 indiquent clairement l'espace qui peut être dégagé au centre de l'arbre du rotor par la disposition particulière des aimants.

## Revendications

1. Moteur synchrone comportant des aimants (5) insérés dans un rotor, lesdits aimants (5) étant positionnés azimutalement au sein dudit rotor avec une direction d'aimantation radiale, ledit rotor coopérant avec un stator de manière à définir un entrefer (8), ledit rotor et ledit stator étant délimités par des pôles, le moteur étant **caractérisé en ce qu'**il est prévu à l'intérieur même du rotor un premier chemin magnétique de fermeture F3 se refermant entre les aimants (5) de deux pôles adjacents pour qu'un flux produit par lesdits aimants (5), quand le moteur fonctionne à puissance constante dans une gamme de vitesses supérieures à la vitesse de base (N0) du moteur, se propage selon ledit premier chemin magnétique de fermeture F3, ce premier chemin magnétique de fermeture F3 ayant une réluctance ajustée entre 0,5 fois et 10 fois la réluctance offerte à un flux produit par lesdits aimants (5) se propageant par ledit entrefer (8) de telle manière que la valeur du courant stator (I) reste à l'intérieur des limites thermiques permises par le moteur sans entraîner la démagnétisation des aimants (5) du rotor quand le moteur fonctionne à puissance constante dans une gamme de vitesses supérieures à la vitesse de base (N0) du moteur.

2. Moteur selon la revendication 1 dans lequel la réluctance, offerte à un flux créé par un courant dans ledit stator et se propageant dans le rotor par un deuxième chemin magnétique F4 ne passant pas par les aimants (5), est comprise entre 1 et 10 fois la valeur offerte à ce dit flux se propageant par un troisième chemin F5 passant par les aimants.

3. Moteur selon l'une des revendications 1 ou 2 dans lequel le chemin magnétique F3 offert au flux desdits aimants (5) à l'intérieur du rotor est réalisé par un matériau ferrimagnétique ou ferromagnétique qui entoure globalement lesdits aimants (5) d'un même pôle et qui dispose entre lesdits pôles de portions de liaison L₁ étroites et saturées magnétiquement dont la largeur l₁ et la forme est définie pour ajuster la valeur de la réluctance offerte au flux des aimants dans le rotor.

4. Moteur selon l'une quelconque des revendications 1 à 3 dans lequel chaque pôle dispose d'au moins deux aimants par pôle, chaque aimant étant entouré par une liaison en un matériau ferrimagnétique ou ferromagnétique, la largeur l₂ de cette liaison magnétique entre les aimants d'un même pôle étant définie pour assurer la tenue mécanique à la centrifugation.

5. Moteur selon l'une quelconque des revendications 1 à 4, comportant un évidement au centre dudit rotor dont le diamètre est compris entre 0,2 et 0,6 fois le diamètre extérieur d'une tôle stator.

## Patentansprüche

1. Synchronmotor mit in einem Rotor eingefügten Magneten (5), die in Azimutrichtung innerhalb des Rotors mit einer radialen Magnetisierungsrichtung positioniert sind, wobei der Rotor mit einem Stator in der Weise zusammenwirkt, dass ein Luftspalt (8) definiert ist, wobei der Rotor und der Stator von Polen begrenzt sind und der Motor **dadurch gekennzeichnet ist, dass** innerhalb des Rotors ein erster geschlossener magnetischer Weg F3 vorgesehen ist, der sich zwischen den Magneten (5) der zwei benachbarten Pole wieder schließt, um einen Fluss zwischen den Magneten (5) auszubilden, sobald der Motor bei konstanter Leistung in einem größeren Geschwindigkeitsbereich der Grundgeschwindigkeit (N0) des Motors betrieben wird, breitet sich der erste geschlossene magnetische Weg F3 aus, dass der erste geschlossene magnetische Weg F3 einen magnetischen Widerstand aufweist, der zwischen 0,5 mal und 10 mal so groß eingestellt ist wie der magnetische Widerstand, den ein von den Magneten (5) erzeugter Fluss erfährt, der sich in dem Luftspalt (8) in der Weise ausbreitet, dass der Wert des Statorstroms (I) innerhalb der thermischen Grenzen bleibt, die von dem Motor erlaubt werden, ohne eine Entmagnetisierung der Magnete (5) des Rotors zu bewirken, wenn der Motor mit konstanter Leistung in einem größeren Geschwindigkeitsbereich der Grundgeschwindigkeit (N0) des Motors betrieben wird.

2. Motor nach Anspruch 1, bei dem der magnetische Widerstand, dem ein Fluß ausgesetzt ist, der von einem Strom im Stator erzeugt wird und sich im Rotor gemäß einem zweiten Magnetweg F4 ausbreitet, der nicht über die Magnete (5) verläuft, zwischen 1 und 10 mal so groß ist wie der magnetische Widerstand, den der Fluß erfährt, der sich über einen dritten Weg F5 ausbreitet, der über die Magnete verläuft.

3. Motor nach einem der Ansprüche 1 und 2, bei dem der Magnetweg F3, dem der Fluß der Magnete (5) innerhalb des Rotors ausgesetzt ist, aus einem ferrimagnetischen oder ferromagnetischen Material besteht, das global die Magnete eines gleichen Pols umgibt und das zwischen diesen Polen schmale und magnetisch gesättigte Verbindungsabschnitte L1 aufweist, deren Breite 11 und Form so definiert sind, daß der Wert des magnetischen Widerstands eingestellt wird, den der Fluß der Magnete im Rotor erfährt.

4. Motor nach einem beliebigen der Ansprüche 1 bis 3, bei dem jeder Pol über mindestens zwei Magnete je Pol verfügt, wobei jeder Magnet von einer Verbindung aus einem ferrimagnetischen oder einem ferromagnetischen Material umgeben ist und wobei die Breite 12 dieser Verbindung zwischen den Magneten des gleichen Pols so definiert ist, daß der mechanische Widerstand gegen die Zentrifugalkraft gewährleistet ist.

5. Motor nach einem beliebigen der Ansprüche 1 bis 3, bei dem ein Freiraum im Zentrum des Rotors vorliegt, dessen Durchmesser zwischen 0,2 und 0,6 mal so groß wie der Außendurchmesser eines Statorblechs ist.

## Claims

1. A synchronous motor including permanent magnets (5) inserted in a rotor, said permanent magnets (5) having azimuth positions within said rotor and having radial magnetization, said rotor co-operating with a stator so as to define an air gap (8), said rotor and said stator being defined by poles, the motor being **characterized in that** a first loop-closing magnetic path F3 loop-closing between the permanent magnets (5) of two adjacent poles is realized inside the rotor in order a flux produced by said permanent magnets (5), when the motor operates at constant power in a range of speeds superior to the base speed (No) of the motor, propagates along said first loop-closing magnetic path F3, this first loop-closing magnetic path F3 having a reluctance adjusted between 0.5 times and 10 times the reluctance offered to a flux produced by said permanent magnets (5) and propagating via said air gap (8) so that the value of the stator current (I) stays between the thermal limits allowed by the motor without inducing the demagnetization of the permanent magnets (5) of the rotor when the motor operates at constant power in a range of speeds superior to the base speed (No) of the motor.

2. A motor according to claim 1, in which the reluctance offered to flux created by current flowing in said stator and propagating through the rotor via a second magnetic path F4 not passing via the permanent magnets (5) lies in the range 1 to 10 times the reluctance offered to said flux and propagating via a third path F5 that passes via the magnets.

3. A motor according to claim 1 or 2, in which the magnetic path F3 offered to the flux from said permanent magnets (5) inside the rotor is made of a ferrimagnetic or ferromagnetic material which generally surrounds said same pole magnets (5) and which provides between said poles narrow link portions L1 that are magnetically saturated and of width 1₁ and shape defined to adjust the value of the reluctance offered in the rotor to the flux from the magnets.

4. A motor according to any one of claims 1 to 3, in which each pole has at least two magnets per pole, each magnet being surrounded by a link of ferrimagnetic or ferromagnetic material, the width 12 of said magnetic link between the magnets of the same pole being defined to ensure mechanical strength against centrifugal forces.

5. A motor according to any one of claims 1 to 4, including a hollow in the center of said rotor with a diameter lying in the range 0.2 times to 0.6 times the outside diameter of a stator lamination.
